# EUROPÄISCHE PATENTANMELDUNG

(11) **EP 1 429 067 A1**
(43) Veröffentlichungstag der Anmeldung: **16.06.2004**
(21) Anmeldenummer: 02027743.0
(22) Anmeldetag: 11.12.2002
(51) Int. Cl.: F16L 55/04

(54) **Verfahren und Vorrichtung zur Dämpfung von Druckimpulsen in Rohrleitungen**

(71) Anmelder: HFG HVAC Faiveley GmbH & Co.KG, 04435 Schkeuditz (DE)
(72) Erfinder: Jaritz, Rudolf, 04435 Schkeuditz (DE)
(74) Vertreter: Köckeritz, Günter

(57) **Zusammenfassung**

Die Erfindung betrifft ein Verfahren und eine Vorrichtung (1) zur Dämpfung und Glättung von Druckimpulsen in Rohrleitungen, insbesondere kurzer Druckspitzen von Impulsen in Klimaanlagen, sowie eine mit einer derartigen Vorrichtung versehene Klimaanlage, wobei die Vorrichtung dadurch gekennzeichnet ist, dass im Rohrsystem der Klimaanlage ein Hohlkörper (6) vorgesehen ist, der mit mindestens einer vom Verdichter (7) abgehenden Druckimpulsleitung (2) und mindestens einer zum Drucksensor (8) fortführende Rohrleitung (5) verbunden ist.

Das erfindungsgemäße Verfahren ist dadurch gekennzeichnet, dass die Druckspitzen des Verdichters über eine Druckimpulsleitung in den Hohlraum einer Vorrichtung geleitet werden, wobei die Druckspitzen im Hohlraum expandieren und das gasförmige Medium mit einem geglätteten Druckniveau in die zum Drucksensor fortführende Rohrleitung geleitet wird.

## Beschreibung

Die Erfindung betrifft ein Verfahren und eine Vorrichtung zur Dämpfung und Glättung von Druckimpulsen in Rohrleitungen, insbesondere kurzer Druckspitzen von Impulsen in Klimaanlagen, sowie eine mit einer derartigen Vorrichtung versehene Klimaanlage.

Die Aufgabe der Erfindung besteht darin, von Hubkolbenverdichtern in Rohrleitungen bei Kühl- und Klimaanlagen erzeugte Druckimpulse, insbesondere in Steuerleitungen zu Drucksensoren zu dämpfen und auf eine einfache Weise ohne nennenswerten Montageaufwand zu ermöglichen. Erfindungsgemäß wird diese Aufgabe durch die Merkmale der Ansprüche 1 und 8 gelöst. Besonders vorteilhafte Ausführungen der Erfindung sind in den zugehörigen Ansprüchen enthalten.
Demnach beinhaltet die Erfindung eine Vorrichtung zur Dämpfung und/oder Kompensation von Druckimpulsen von gasförmigen Medien in Rohrleitungen, insbesondere kurzer Druckspitzen von Impulsen in Klimaanlagen mit Hubkolbenverdichtern, wobei im Rohrsystem der Klimaanlage ein Hohlkörpers vorgesehen ist, der mit mindestens einer vom Verdichter abgehenden Druckimpulsleitung und mindestens einer zum Drucksensor fortführende Rohrleitung verbunden ist.
Dadurch wird die Glättung bzw. Kompensation kurzer Druckspitzen von Impulsen und auf eine einfache Weise ohne nennenswerten Montageaufwand ermöglicht.
Vorteilhaft weist der Hohlkörper einen Hohlraum zur Expansion auf, um die über die Impulsleitungen ankommenden Druckspitzen zu glätten bzw. zu kompensieren.
Nach einem bevorzugten Merkmal der Erfindung ist der Hohlkörper ein Mantelrohr mit einem Hohlraum.
Nach einem weiteren Merkmal ist der Hohlkörper an den Enden mit Verschlusslötungen versehen.

Vorteilhaft sind die daran angeschlossenen Rohleitungen entweder in axialer Form an den Verschlusslötungen oder radial über den Umfang des Hohlkörpers angeordnet.
Durch die Expansion im Hohlraum wird vorteilhaft der Weitertransport der eintreffenden Impulse verhindert. Sie werden aus dem vorhandenen Innendruck abgebaut und es bildet sich ein nahezu gleichmäßiges Druckniveau aus. Der Aufwand für die erfindungsgemäße Druckkompensation ist sehr gering und kann den physikalischen Verhältnissen gut angepasst werden.

Die Erfindung beinhaltet auch eine Klimaanlage mit Hubkolbenverdichtern, die durch eine Vorrichtung zur Dämpfung und/oder Kompensation von Druckimpulsen von gasförmigen Medien in Rohrleitungen, insbesondere kurzer Druckspitzen von Impulsen nach den o.g. Merkmalen gekennzeichnet ist.

Zum Gegenstand der Erfindung gehört weiterhin ein Verfahren zur Dämpfung und/oder Kompensation von Druckimpulsen von gasförmigen Medien in Rohrleitungen, insbesondere kurzer Druckspitzen von Impulsen in Klimaanlagen mit Hubkolbenverdichtern. Erfindungsgemäß werden danach die Druckspitzen des Verdichters über eine Druckimpulsleitung in ein Hohlkörper geleitet. Die Druckspitzen expandieren dabei im Hohlraum des Hohlkörpers und das gasförmige Medium wird mit einem geglätteten Druckniveau in die zum Drucksensor fortführende Rohrleitung geleitet. Die in den Steuerleitungen befindlichen Drucksensoren werden vor kurzen Druckanstiegen geschützt. Damit gelangt ein Durchschnittsdruckniveau am Sensor zur Auswertung. Die dabei erreichte Expansion im Hohlraum verhindert einen Weitertransport der eintreffenden Impulse. Damit werden sie aus dem vorhandenen Innendruck abgebaut und es bildet sich ein nahezu gleichmäßiges Druckniveau aus. Der Aufwand für diese Art von Druckkompensatoren ist gering und kann den physikalischen Verhältnissen gut angepasst werden.

Nachstehend soll die Erfindung anhand eines Ausführungsbeispiels näher erläutert werden.

In den zugehörigen Zeichnungen zeigen:
- Figur 1:: eine Vorrichtung zur Kompensation bzw. Dämpfung von Druckspitzen mit Rohranschlüssen in axialer Form und an deren Verschlusslötungen angebrachten Impulsleitungen.
- Figur 2:: eine Vorrichtung zur Kompensation bzw. Dämpfung von Druckspitzen mit Rohranschlüssen in radialer Form und an deren Umfang angebrachten Impulsleitungen in beliebiger Anzahl.
- Figur 3:: ein Kreislaufschema einer Klimaanlage.

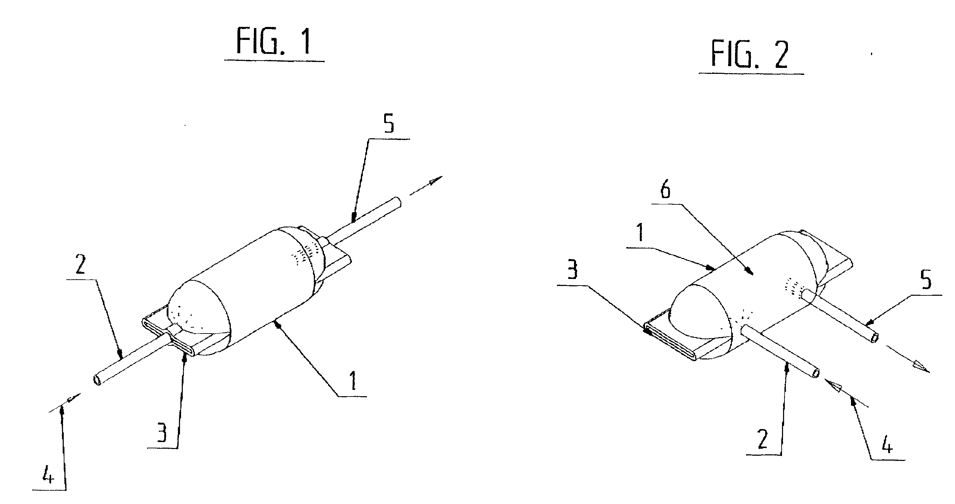

Die erfindungsgemäße Vorrichtung 1 zur Kompensation bzw. Dämpfung von Druckspitzen besteht gemäß den Figuren 1 und 2 aus einem Hohlkörper bzw. Mantelrohr mit eingebrachten Bohrungen für die Impulsleitungen 2, die in einer beliebigen Anzahl angebracht werden können. An den Enden 3 ist der Hohlkörper verschlossen, bzw. wie in der Figur 1 gezeigt mit der Impulsleitung 2 bzw. der fortführende Rohrleitung 5 verbunden. Die über die Druckimpulsleitung 2 geleiteten Druckspitzen 4 eines Erzeugers 7 (Verdichter ) gelangen in das Mantelrohr bzw. den Hohlkörper und expandieren im Hohlraum 6 des Hohlkörper. Durch den Energieabbau im Hohlkörper gelangt ein fast geglättetes Druckniveau in die zum Drucksensor fortführende Rohrleitung 5. Somit wird ein Druckniveau erzeugt, welches zum Messen für Sensoren 8 (z. B. Druckschalter) geeignet ist.

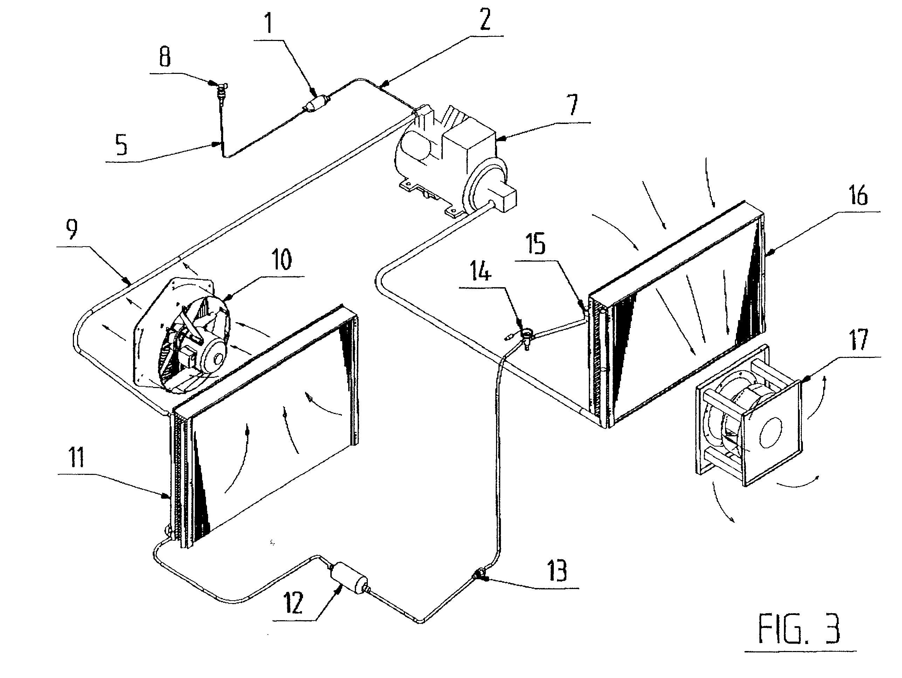

Die Figur 3 zeigt in schematischer Darstellung den Kreislauf einer Klimaanlage mit integrierter Vorrichtung 1 zur Kompensation bzw. Dämpfung von Druckspitzen.
Darin bedeuten:
17 - Lüfter für Kaltluft,
16 - Verdampfer,
15 - Verteiler,
14 - Expansionsventil,
13 - Schauglas,
12 - Filter,
11 - Kondensator,
10 - Lüfter für Kühlluft,
09 - Rohsystem der Anlage.
Die anderen Bezugszeichen wurde bereits in der o.a. Beschreibung genannt.

Die Funktion einer Klimaanlage beruht im wesentlichen darauf, dass ein spezifisches Gas (Kältemittel) von einem hohen zu einem niedrigen Druckniveau expandiert und dabei Wärmeenergie benötigt, welche der Umgebung entzogen wird. So wird im Expansionsventil 14 flüssiges Kältemittel entspannt und über den Verteiler 15 dem Verdampfer 16 zugeführt. Durch die Volumenvergrößerung wird Wärme benötigt und der von dem Lüfter für Kaltluft 17 geförderten Luft entzogen. Die dabei gekühlte Luft wird dem zu kühlenden Medium wieder zugeführt. Von dem Verdichter 7 wird das Kältemittelgas abgesaugt und auf ein höheres Druckniveau gefördert. Hierbei sind Druckmessungen erforderlich um die Klimaanlage zu schützen. Das Druckgas wird über das Rohrsystem der Anlage 9 mit hohem Druck und Temperatur in den Kondensator 11 gefördert, der wiederum mittel eines Lüfters für Kühlluft 10 mit Luft der Umgebung gekühlt wird. Bei gleichbleibenden hohem Druckniveau verflüssigt sich das Kältemittel und wird über den Filter 12 und Schauglas 13 dem Expansionsventil 14 wieder zugeführt.

## Patentansprüche

1. Vorrichtung zur Dämpfung und/oder Kompensation von Druckimpulsen von gasförmigen Medien in Rohrleitungen, insbesondere kurzer Druckspitzen von Impulsen in Klimaanlagen mit Hubkolbenverdichtern, **dadurch gekennzeichnet, dass** im Rohrsystem (9) der Klimaanlage ein Hohlkörper vorgesehen ist, der mit mindestens einer vom Verdichter (7) abgehenden Druckimpulsleitung (2) und mindestens einer zum Drucksensor (8) fortführende Rohrleitung (5) verbunden ist.

2. Vorrichtung nach Anspruch 1, **dadurch gekennzeichnet, dass** der Hohlkörper einen Hohlraum (6) zur Expansion aufweist, um die über die Impulsleitungen (2) ankommenden Druckspitzen zu glätten.

3. Vorrichtung nach den Ansprüchen 1 und 2, **dadurch gekennzeichnet, dass** der Hohlkörper ein Mantelrohr mit einem Hohlraum (6) ist.

4. Vorrichtung nach einem der obigen Ansprüche, **dadurch gekennzeichnet, dass** der Hohlkörper an den Enden (3) mit Verschlusslötungen versehen ist.

5. Vorrichtung nach einem der obigen Ansprüche, **dadurch gekennzeichnet, dass** die Rohleitungen (2) und (5) in axialer Form an den Verschlusslötungen der Enden (3) angeordnet sind.

6. Vorrichtung nach einem der obigen Ansprüche, **dadurch gekennzeichnet, dass** die Rohleitungen (2) und (5) radial über den Umfang des Hohlkörpers angeordnet sind.

7. Klimaanlage mit Hubkolbenverdichtern, **gekennzeichnet durch,** eine Vorrichtung zur Dämpfung und/oder Kompensation von Druckimpulsen von gasförmigen Medien in Rohrleitungen, insbesondere kurzer Druckspitzen von Impulsen nach den Ansprüchen 1 bis 6.

8. Verfahren zur Dämpfung und/oder Kompensation von Druckimpulsen von gasförmigen Medien in Rohrleitungen, insbesondere kurzer Druckspitzen von Impulsen in Klimaanlagen mit Hubkolbenverdichtern, **dadurch gekennzeichnet, dass** die Druckspitzen (4) des Verdichters (7) über eine Druckimpulsleitung (2) in den Hohlraum (6) einer Vorrichtung (1) geleitet werden, wobei die Druckspitzen (4) im Hohlraum (6) expandieren und das gasförmige Medium mit einem geglätteten Druckniveau in die zum Drucksensor (8) fortführende Rohrleitung (5) geleitet wird.
